# EUROPEAN PATENT APPLICATION

(11) **EP 4 578 554 A1**
(43) Date of publication of application: **02.07.2025**
(21) Application number: 23855983.5
(22) Date of filing: 17.02.2023
(51) Int. Cl.: B04B 9/08

(54) **CENTRIFUGAL DRIVING APPARATUS AND CENTRIFUGAL DEVICE**

(30) Priority: 25.08.2022 CN 202211027768
(71) Applicant: Beijing Ability Technology Co., Ltd., Beijing 100081 (CN)
(72) Inventor: NA, Xing, Beijing 100081 (CN); LIU, Jixin, Beijing 100081 (CN)
(74) Representative: Eisenführ Speiser
(86) International application number: PCT/CN2023/076664
(87) International publication number: WO 2024/040886

(57) **Abstract**

The present application relates to an analytical instrument apparatus, and in particular, to a centrifugal driving apparatus and a centrifugal device. The centrifugal driving apparatus comprises a first rotating disc, a second rotating disc, a first transmission mechanism, a second transmission mechanism, and a driving mechanism; the driving mechanism drives the second rotating disc to rotate around its own rotation center; the first rotating disc is rotatably disposed on the second rotating disc, and the first rotating disc is connected to the second transmission mechanism by means of the first transmission mechanism; the first transmission mechanism and the second transmission mechanism can switch between a rotating state and a locked state, so that the first rotating disc rotates or is locked around its own rotation center when rotating synchronously with the second rotating disc. In the present application, the first rotating disc can rotate or be locked when revolving with the second rotating disc. A centrifuge operation is implemented when the first rotating disc only revolves, and a mixing operation is implemented when the first rotating disc revolves and rotates. Mixing and centrifugal separation operations on a sample are completed by means of one machine, saving time and labor, and improving the experiment efficiency.

## Description

### CROSS-REFERENCES TO RELATED APPLICATIONS

The present application claims priority to Chinese Patent Application No. 202211027768.9, filed on August 25, 2022, entitled "Centrifugal Driving Apparatus and Centrifugal Device," which is incorporated herein by reference in its entirety.

### FIELD

The present application relates to the field of analytical instruments, and more particularly to a centrifugal drive device and a centrifugal apparatus.

### BACKGROUND

In analytical chemistry experiments, it is a standard method flow to extract and separate a substance to be detected. Centrifugal separation is a method in which substances with different specific gravities are separated with help of centrifugal forces. Since equipment such as centrifuges may generate a relatively high angular velocity, a centrifugal force is much greater than gravity, and suspended matter in a solution is easy to precipitate. Since substances with different specific gravities are subjected to different centrifugal forces, sedimentation speeds are different, which may separate substances with different specific gravities. Centrifugal separation of biomolecules is the most commonly used biochemical separation method since different biomolecules have different volumes and densities, and may be separated by sedimentation under the action of different centrifugal forces. With the development of life science technology, centrifugal separation technology has become an indispensable separation technology in biochemistry and molecular biology.

Currently, a sample usually needs to be shaken manually or by machines during an extraction process and then put into a centrifuge for separation, which requires multiple devices to complete, and is time-consuming and labor-intensive, reducing the experimental efficiency.

### BRIEF SUMMARY

The present application provides a centrifugal drive device and a centrifugal apparatus to solve at least one problem in the related art, complete mixing, extraction and centrifugal separation operations of a sample by one machine, save time and labor, and improve experimental efficiency.

The present application provides a centrifugal drive device, including a first rotary disk, a second rotary disk, a first transmission mechanism, a second transmission mechanism and a drive mechanism;
where an output end of the drive mechanism is connected to the second rotary disk to drive the second rotary disk to rotate around a center of rotation of the second rotary disk itself;
the first rotary disk is rotatably provided at the second rotary disk, and is connected to the second transmission mechanism through the first transmission mechanism; the first transmission mechanism and the second transmission mechanism are switchable between a rotary state and a lockup state respectively to enable the first rotary disk to rotate around a center of rotation of the first rotary disk itself when the second rotary disk rotates synchronously or to be locked.

According to the centrifugal drive device provided by the present application, the first transmission mechanism includes a first transmission wheel and a first one-way clutch, the second transmission mechanism includes a second transmission wheel and a second one-way clutch, and the drive mechanism includes a first motor;
the first transmission wheel is connected to the second transmission wheel in a transmission manner, and the first transmission wheel is connected to the first rotary disk in a transmission manner through a first rotary shaft;
the second one-way clutch is provided at a second rotary shaft of the second transmission wheel to restrict the second transmission wheel to rotate around a first direction;
an output end of the first motor is connected to the second rotary disk in a transmission manner through a third rotary shaft;
the first one-way clutch is provided at the first rotary shaft, to restrict the first transmission wheel and the first rotary disk to rotate around a second direction, or the first one-way clutch is provided between the third rotary shaft and the second transmission wheel to restrict the second transmission wheel to rotate synchronously only when the third rotary shaft rotates around a second direction; and
the second direction is opposite to the first direction.

According to the centrifugal drive device provided by the present application, the centrifugal drive device further includes a support table, the drive mechanism is fixed to the support table, an outer ring of the second one-way clutch is fixed at the support table, and an inner ring of the second one-way clutch is connected to the second rotary shaft; the second rotary disk is provided with a through hole for mounting the first rotary shaft, an outer ring of the first one-way clutch is fixed inside the through hole, an inner ring of the first one-way clutch is connected to the first rotary shaft, or an outer ring of the first one-way clutch is connected to the second rotary shaft, and an inner ring of the first one-way clutch is connected to the third rotary shaft.

According to the centrifugal drive device provided by the present application, the first transmission mechanism further includes a first support bearing, the first support bearing and the first rotary shaft are coaxially provided, and the first support bearing is connected between the second rotary disk and the first rotary shaft;
the second transmission mechanism further includes a second support bearing, the second support bearing and the second rotary shaft are coaxially provided, and the second support bearing is connected between the support table and the second rotary shaft.

According to the centrifugal drive device provided by the present application, the drive mechanism further includes a second motor, the second motor is connected to the second transmission mechanism in a transmission manner to drive the second transmission mechanism to rotate around a center of rotation of the second transmission mechanism itself or to stop.

According to the centrifugal drive device provided by the present application, the support table includes a support plate, a pillar and a bottom plate, where the support plate is supported at the bottom plate by the pillar, the drive mechanism is fixed to the support plate, and the outer ring of the second one-way clutch is fixed at the support plate.

According to the centrifugal drive device provided by the present application, the support table includes a support plate, a pillar, a bracket and a bottom plate, where the support plate is supported at the bottom plate by the pillar, the drive mechanism is fixed to the support plate, the bracket is fixed at the support plate and the outer ring of the second one-way clutch is fixed to the bracket.

According to the centrifugal drive device provided by the present application, the first one-way clutch and the second one-way clutch are one of a one-way bearing, a ratchet structure or an electromagnetic clutch respectively.

According to the centrifugal drive device provided by the present application, the first transmission wheel and the second transmission wheel are bevel gears respectively.

According to the centrifugal drive device provided by the present application, an axis of the first rotary disk is provided parallel to an axis of the second rotary disk, or is provided at an angle with respect to an axis of the second rotary disk.

The present application further provides a centrifugal apparatus, including: the centrifugal drive device provided by embodiments of the present application.

The centrifugal drive device provided by the present application includes the first rotary disk, the second rotary disk, the first transmission mechanism, the second transmission mechanism and the drive mechanism. The drive mechanism provides a drive force for the entire device. The first rotary disk may rotate synchronously with the second rotary disk, and the first rotary disk rotates or stops using the first transmission mechanism and the second transmission mechanism to be switchable between the rotary state and the lockup state. The first rotary disk itself does not rotate and only rotates synchronously with the second rotary disk to realize a centrifugal operation, and the first rotary disk rotates around itself and rotates with the second rotary disk to realize a mixing operation, thereby completing mixing and centrifugal separation operations of the sample in one machine, saving time and effort, and improving efficiency of a centrifugal experiment.

Furthermore, in the centrifugal apparatus provided by the present application, the centrifugal apparatus also has the various advantages as described above since it has the centrifugal drive device as described above.

Additional aspects and advantages of the present application will be set forth in part in the description which follows and, in part, will be apparent from the description, or may be learned by practice of the present application.

### BRIEF DESCRIPTION OF THE DRAWINGS

To illustrate solutions of the present application or in the related art more clearly, accompanying drawings used in the description of the embodiments or the related art are briefly introduced below. The drawings described below are only some embodiments of the present application. For those skilled in the art, other drawings may also be obtained based on these drawings without creative effort.
FIG. 1 is a schematic structural diagram of embodiment 1 according to the present application;
FIG. 2 is a schematic structural diagram of embodiment 2 according to the present application;
FIG. 3 is a schematic structural diagram of embodiment 3 according to the present application;
FIG. 4 is a schematic structural diagram of embodiment 4 according to the present application;
FIG. 5 is one of assembly implementations of a first rotary disk and a second rotary disk in a centrifugal drive device according to the present application; and
FIG. 6 is a schematic structural diagram of embodiment 5 according to the present application;

Reference numerals:
1: second rotary disk; 2: first rotary disk; 3: first one-way clutch; 4: third rotary shaft; 5: second rotary shaft; 6: first transmission wheel; 7: second transmission wheel; 8: second support bearing; 9: first motor; 10: support plate; 11: second one-way clutch; 12: shock-absorbent member; 13: pillar; 14: bottom plate; 15: fix seat; 16: bearing gland; 17: first support bearing; 18: first rotary shaft; 19: bracket; 20: first pulley; 21: second pulley; 22: transmission belt; 23: second motor.

### DETAILED DESCRIPTION

To illustrate objectives, solutions and advantages of the present application, the solutions of the present application are described clearly and completely below in combination with the drawings in the application. The described embodiments are part of the embodiments of the application, not all of them. All other embodiments obtained by those skilled in the art based on the embodiments of the present application without any creative work fall within the protection scope of the present application.

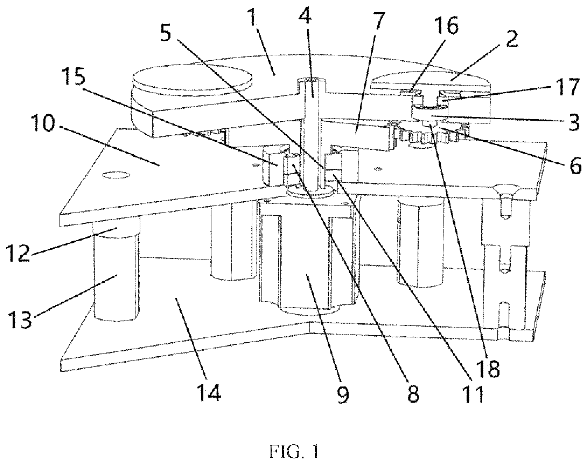

Referring now to FIG. 1 to FIG. 6, the embodiments of the present application are described. It should be understood that the following description is only an illustrative embodiment of the present application and does not form any limitation to the present application.

As shown in FIG. 1 to FIG. 6, the present application provides a centrifugal drive device, including a first rotary disk 2, a second rotary disk 1, a first transmission mechanism, a second transmission mechanism and a drive mechanism. A plurality of first rotary disks 2 may be arranged along a circumference of the second rotary disk 1.

An output end of the drive mechanism is connected to the second rotary disk 1 to drive the second rotary disk 1 to rotate around a center of rotation of the second rotary disk itself; the first rotary disk 2 is rotatably provided at the second rotary disk 1, and is connected to the second transmission mechanism through the first transmission mechanism; the first transmission mechanism and the second transmission mechanism are switchable between a rotary state and a lockup state respectively to enable the first rotary disk 2 to rotate around a center of rotation of the first rotary disk 2 itself when the second rotary disk 1 rotates synchronously or to be locked.

In an embodiment, the drive mechanism is used as a power source of the centrifugal drive device of the present application to drive the first rotary disk 2 and the second rotary disk 1 to rotate, and the drive mechanism may be driven by a motor. The drive mechanism drives the second rotary disk 1 to rotate around itself, and the first rotary disk 2 is mounted at the second rotary disk 1 and rotates synchronously with the second rotary disk 1.

Furthermore, the first rotary disk 2 may also rotate around itself. When the first rotary disk 2 moves synchronously with the second rotary disk 1, and the rotation of the first rotary disk 2 around itself is controlled by the first transmission mechanism and the second transmission mechanism. In an embodiment, both the first transmission mechanism and the second transmission mechanism may rotate or lock, and both may adopt a one-way rotation limit member, and the first rotary disk rotates around itself or stops by using one-way rotation limit functions of the first transmission mechanism and the second transmission mechanism and the forward and reverse rotation of the drive mechanism. Members for realizing the above-mentioned one-way rotation limit functions may be selected from one-way bearings or clutches, etc., which are specifically described in the following embodiments.

It may be understood that the first rotary disk 2 is used to place and carry a sample. A centrifugal operation of the sample may be realized when the first rotary disk 2 itself does not rotate but moves synchronously with the second rotary disk 1; and a mixing operation of the sample may be realized when the first rotary disk 2 rotates around its own center of rotation and rotates with the second rotary disk 1.

The centrifugal drive device provided by the present application includes the first rotary disk, the second rotary disk, the first transmission mechanism, the second transmission mechanism and the drive mechanism. The drive mechanism provides a drive force for the entire device. The first rotary disk may rotate synchronously with the second rotary disk, and the first rotary disk rotates or stops using the first transmission mechanism and the second transmission mechanism to be switchable between the rotary state and the lockup state. The first rotary disk itself does not rotate and only rotates synchronously with the second rotary disk to realize a centrifugal operation, and the first rotary disk rotates around itself and rotates with the second rotary disk to realize a mixing operation, thereby completing mixing and centrifugal separation operations of the sample in one machine, saving time and effort, and improving efficiency of a centrifugal experiment.

### Embodiment 1

According to the embodiment, the first transmission mechanism includes a first transmission wheel 6 and a first one-way clutch 3, the second transmission mechanism includes a second transmission wheel 7 and a second one-way clutch 11, and the drive mechanism includes a first motor 9. In this embodiment, one-way rotation limit functions of the first transmission mechanism and the second transmission mechanism are realized by a one-way clutch, and a single motor is used to drive the entire centrifugal drive device. The first one-way clutch 3 and the second one-way clutch 11 are one of a one-way bearing, a ratchet structure or an electromagnetic clutch respectively. The one-way clutch in the following embodiments is described in the form of a one-way bearing, that is, the first one-way clutch 3 adopts the first one-way bearing of the following embodiments, and the second one-way clutch 11 adopts the second one-way bearing of the following embodiments.

Specifically, the first transmission wheel 6 is connected to the second transmission wheel 7 in a transmission manner, and the first transmission wheel 6 is connected to the first rotary disk 2 in a transmission manner through the first rotary shaft 18. The first one-way clutch 3 (i.e., the first one-way bearing) is provided at the first rotary shaft 18 to restrict the first transmission wheel 6 and the first rotary disk 2 to rotate only in the second direction. The second one-way clutch 11 (i.e., the second one-way bearing) is provided at a second rotary shaft 5 of the second transmission wheel 7 to restrict the second transmission wheel 7 to rotate only in the first direction. An output end of the first motor 9 is connected to the second rotary disk 1 in a transmission manner through the third rotary shaft 4, and may rotate clockwise or counterclockwise; the second direction is opposite to the first direction.

Furthermore, an axis of the first rotary disk 2 is provided parallel to an axis of the second rotary disk 1. Of course, the axis of the first rotary disk 2 may also be provided at an angle with respect to the axis of the second rotary disk 1. The axis of the first rotary disk 2 of this embodiment is provided parallel to the axis of the second rotary disk 1.

An example that an inner ring of the first one-way bearing (as shown in the figures) may only rotate clockwise and the inner ring of the second one-way bearing (as shown in the figures) may only rotate counterclockwise is taken. An outer ring of the first one-way bearing and an outer ring of the second one-way bearing may be fixed to make the inner rings of the first and second one-way bearings rotate in one way. That is, the outer ring of the first one-way bearing is fixed in a through hole of the second rotary disk 1, and the outer ring of the second one-way bearing is fixed at a fix seat 15. As shown in FIG. 1, the first motor 9 is turned on, and when rotating clockwise, the first motor 9 drives the second rotary disk 1 to rotate clockwise around its own center of rotation through the third rotary shaft 4, and the first rotary disk 2 rotates clockwise with the second rotary disk 1. When the first rotary disk 2 rotates clockwise with the second rotary disk 1 with the third rotary shaft 4 as an axis, since the first transmission wheel 6 and the second transmission wheel 7 are engaged with each other, the first transmission wheel 6 gives the second transmission wheel 7 a clockwise rotation force. However, since the inner ring of the second one-way bearing may only rotate counterclockwise, the second transmission wheel 7 is fixed to the inner ring of the second one-way bearing through the second rotary shaft 5, and the second transmission wheel 7 is limited by the second one-way bearing and cannot rotate clockwise. Because the second transmission wheel 7 cannot rotate, the first transmission wheel 6 rotates clockwise along the first rotary shaft 18 under the force of the second transmission wheel 7. At this time, the first rotary disk 2 rotates itself along the first rotary shaft 18 and also revolves with the second rotary disk 1. At this time, the material mixing operation may be realized after a barrel to be mixed is placed at the first rotary disk 2.

When being set to rotate counterclockwise, the first motor 9 drives the second rotary disk 1 to rotate counterclockwise around its own center of rotation through the third rotary shaft 4, and the first rotary disk 2 rotates counterclockwise synchronously with the second rotary disk 1. When the first rotary disk 2 rotates counterclockwise with the second rotary disk 1 around the third rotary shaft 4 as the axis, since the first transmission wheel 6 and the second transmission wheel 7 are engaged with each other, the first transmission wheel 6 gives the second transmission wheel 7 a counterclockwise rotation force. Since the inner ring of the second one-way bearing may rotate counterclockwise, the second transmission wheel 7 rotates counterclockwise with the first transmission wheel 6 around the third rotary shaft 4 as the axis. At the same time, the first transmission wheel 6 is subjected to a reaction force from the second transmission wheel 7, the force drives the first transmission wheel 6 to rotate counterclockwise, but the first transmission wheel 6 is connected to the inner ring of the first one-way bearing through the first rotary shaft 18, and the inner ring of the first one-way bearing may only rotate clockwise and cannot rotate counterclockwise, and at this time, the first transmission wheel 6 and the first rotary disk 2 are stationary relative to the second rotary disk 1. That is, at this time, the first rotary disk 2 does not rotate on its own, but only revolves with the second rotary disk 1. At this time, material is centrifuged when the material is placed on the first rotary disk 2.

Furthermore, the present embodiment further includes a support table, the drive mechanism is fixed to the support table, the outer ring of the second one-way bearing is fixed to the support table, and the inner ring of the second one-way bearing is connected to the second rotary shaft 5. The second rotary disk 1 is provided with a through hole for mounting the first rotary shaft 18, the outer ring of the first one-way bearing is fixed inside the through hole, and the inner ring of the first one-way bearing is connected to the first rotary shaft 18. In this embodiment, both the outer ring of the second one-way bearing and the outer ring of the first one-way bearing are fixed, only the inner rings of the second and first one-way bearings rotate unidirectionally, and the directions of the unidirectional rotation of the two are opposite.

Furthermore, the support table includes a support plate 10, a pillar 13, a fix seat 15 and a bottom plate 14, the support plate 10 is supported at the bottom plate 14 by the pillar 13, the drive mechanism is fixed to the support plate 10, the fix seat 15 is fixed at the support plate 10, and the outer ring of the second one-way bearing is fixed at the support plate 10 by the fix seat 15.

Furthermore, the support table further includes a shock-absorbent member 12 connected between the support plate 10 and the pillar 13 to reduce the shock caused by the device when the device is started.

Furthermore, the first transmission mechanism further includes a first support bearing 17, the first support bearing 17 and the first rotary shaft 18 are coaxially provided, and the first support bearing 17 is connected between the second rotary disk 1 and the first rotary shaft 18. The second transmission mechanism further includes a second support bearing 8, the second support bearing 8 and the second rotary shaft 5 are coaxially provided, and the second support bearing 8 is connected between the fix seat 15 and the second rotary shaft 5. In this embodiment, the first support bearing 17 is used to support the first rotary shaft 18, and the second support bearing 8 is used to support the second rotary shaft 5.

Furthermore, this embodiment further includes a bearing gland 16 and the bearing gland 16 is fixed at the first rotary disk 2 to restrict the first support bearing 17 and the first one-way bearing.

### Embodiment 2

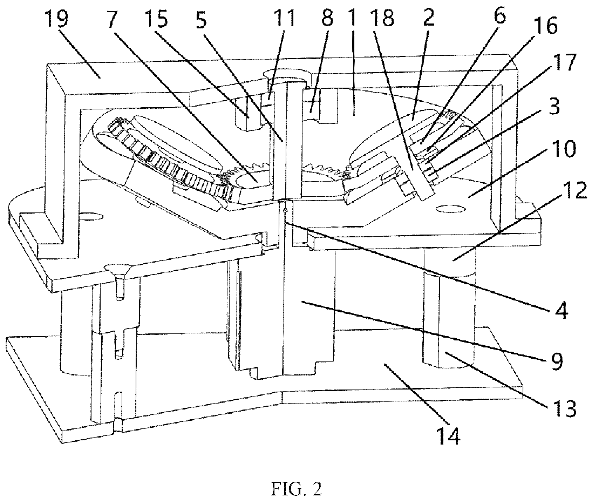

Embodiment 2 has most of the same structure as embodiment 1, and only the differences with embodiment 1 are described. As shown in FIG. 2, the support table of the present embodiment includes a support plate 10, a pillar 13, a fix seat 15, a bracket 19 and a bottom plate 14, the support plate 10 is supported at the bottom plate 14 by the pillar 13, the drive mechanism is fixed to the support plate 10, the bracket 19 is fixed at the support plate 10, and an outer ring of the second one-way bearing is fixed at the bracket 19 by the fix seat 15. That is, a bracket 19 is added in embodiment 2 on the basis of the structure of the support table of embodiment 1. The bracket 19 is fixed above the support plate 10. The fix seat 15 in this embodiment is fixed below the bracket 19. Both the second support bearing 8 and the second one-way bearing are mounted at the bracket 19 through the fix seat. In this embodiment, the second transmission mechanism is mounted through the bracket to make reasonable use of space. In this embodiment, the second rotary disk 1 is designed to be inwardly concave to make the axis of the first rotary shaft 18 and the axis of the second rotary shaft 5 form a certain angle. This inwardly concave design allows the first rotary disk 2 to form a more complex motion mode when rotating, and reduces a radial force of the first rotary shaft 18. The axis of the first rotary disk 2 of this embodiment is provided at an angle with respect to the axis of the second rotary disk 1.

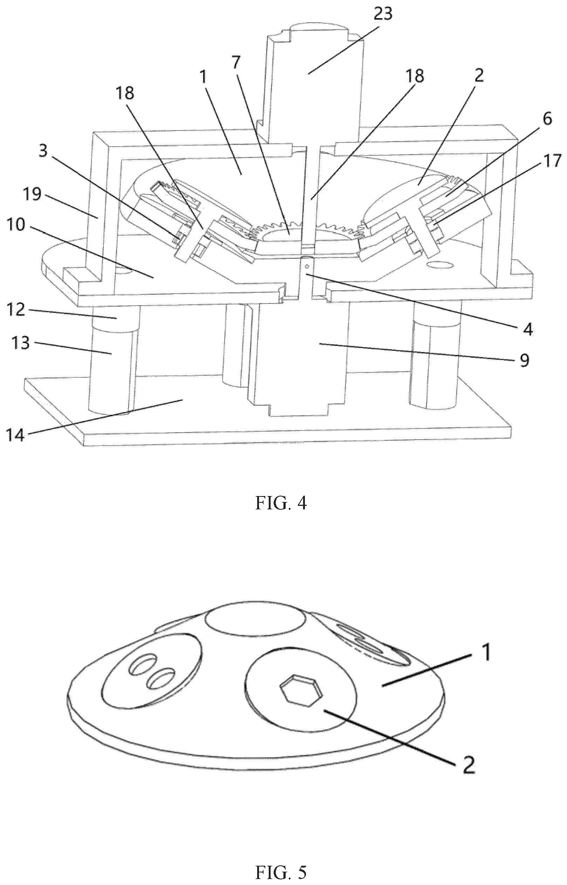

Furthermore, in this embodiment, the first transmission wheel 6 and the second transmission wheel 7 are bevel gears respectively, and the first transmission wheel 6 and the second transmission wheel 7 are placed at an upper side of the second rotary disk 1. The second rotary disk 1 is designed accordingly to be processed into a concave structure as shown in FIG. 2, and the axis of the first rotary shaft 18 and the axis of the second rotary shaft 5 form a certain angle. This inwardly concave design allows the first rotary disk 2 to form a more complex motion mode when rotating, and reduces a radial force of the first rotary shaft 18. The second rotary disk 1 may also be designed with a convex structure (as shown in FIG. 5), or the plane structure in embodiment 1 may be adopted.

### Embodiment 3

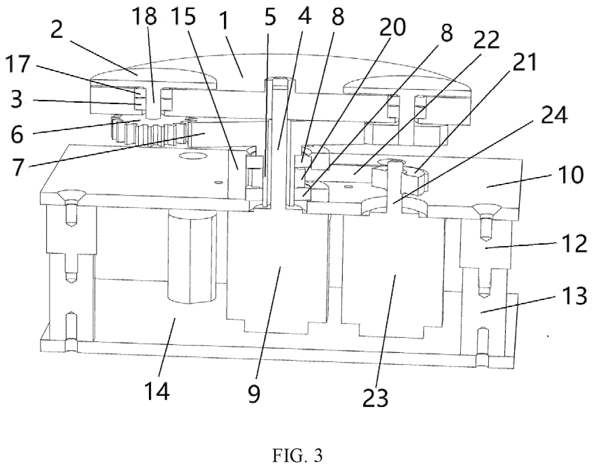

Embodiment 3 has most of the same structure as embodiment 1, and only the differences with embodiment 1 are described. As shown in FIG. 3, the drive mechanism of this embodiment further includes a second motor 23 and a third transmission mechanism. The second motor 23 is connected to the second transmission wheel 7 of the second transmission mechanism in a transmission manner through the third transmission mechanism to drive the second transmission wheel 7 to rotate around its own center of rotation, stop or be in a free state. The second transmission mechanism in this embodiment is only composed of the second transmission wheel 7, and no second one-way bearing is provided. This embodiment adopts a dual-motor drive form, that is, a second motor 23 and a third transmission mechanism are added on the basis of embodiment 1, and the second one-way bearing is removed.

In this embodiment, the second transmission wheel 7 may rotate clockwise, counterclockwise, be a brake-stop state, and a free follow-up state through the second motor 23. The brake-stop state has the same effect as when the second one-way bearing in embodiment 1 is in the lock state, and the free follow-up state has the same effect as when the second one-way bearing in embodiment 1 is in the free state. When the second motor 23 is turned on, the second motor 23 may drive the second transmission wheel 7 to rotate unidirectionally through the third transmission mechanism, and the first transmission wheel 6 engaged with the second transmission wheel 7 may adjust a speed under the drive of the second transmission wheel 7. Specifically, when the first rotary disk 2 rotates synchronously with the second rotary disk 1, and the first rotary disk 2 may rotate by itself, the second transmission wheel 7 may be driven to rotate by the second motor 23 to adjust speeds of the first transmission wheel 6 and the first rotary disk 2, and a degree of material mixing may be adjusted by adjusting the speed of the first rotary disk 2.

An example that the inner ring of the first one-way bearing (as shown in the figures) may only rotate clockwise is taken. As shown in FIG. 3, the first motor 9 is turned on, and is set to rotate clockwise, the first motor 9 drives the second rotary disk 1 to rotate clockwise around its own center of rotation through the third rotary shaft 4, and the first rotary disk 2 rotates synchronously clockwise with the second rotary disk 1. When the first rotary disk 2 rotates clockwise with the second rotary disk 1 with the third rotary shaft 4 as an axis, since the first transmission wheel 6 and the second transmission wheel 7 are engaged with each other, the first transmission wheel 6 gives the second transmission wheel 7 a clockwise rotation force. At this time, the second motor 23 is set in a brake-stop state and cannot rotate. The second transmission wheel 7 is connected to the third transmission mechanism through the second rotary shaft 5. Since the second motor 23 cannot rotate, the second transmission wheel 7 cannot rotate. Because the second transmission wheel 7 cannot rotate, the first transmission wheel 6 rotates clockwise along the first rotary shaft 18 under the force of the second transmission wheel 7. At this time, a state that the first rotary disk 2 rotates itself along the first rotary shaft 18 and also revolves with the second rotary disk 1 is formed. At this time, the material mixing operation may be realized after a barrel to be mixed is placed at the first rotary disk 2.

When being set to rotate counterclockwise, the first motor 9 drives the second rotary disk 1 to rotate counterclockwise around its own center of rotation through the third rotary shaft 4, and the first rotary disk 2 rotates counterclockwise synchronously with the second rotary disk 1. When the first rotary disk 2 rotates counterclockwise with the second rotary disk 1 around the third rotary shaft 4 as the axis, since the first transmission wheel 6 and the second transmission wheel 7 are engaged with each other, the first transmission wheel 6 gives the second transmission wheel 7 a counterclockwise rotation force. At this time, the second motor 23 is set to a free rotation state, and the second transmission wheel 7 is connected to the third transmission mechanism through the second rotary shaft 5. Since the second motor 23 is in a free rotation state, the second transmission wheel 7 rotates counterclockwise with the first transmission wheel 6 with the third rotary shaft 4 as the axis. At the same time, the first transmission wheel 6 is subjected to a reaction force from the second transmission wheel 7, the force drives the first transmission wheel 6 to rotate counterclockwise, but the first transmission wheel 6 is connected to the inner ring of the first one-way bearing through the first rotary shaft 18, and the inner ring of the first one-way bearing may only rotate clockwise and cannot rotate counterclockwise, and at this time, the first transmission wheel 6 and the first rotary disk 2 are stationary relative to the second rotary disk 1. At this time, the first rotary disk 2 does not rotate on its own, but only revolves with the second rotary disk 1. At this time, material is centrifuged when the material is placed on the first rotary disk.

Compared with embodiment 1 in which all members are driven by the first motor 9, after the second motor 23 is added to embodiment 2, the second motor 23 may be used as a main driving force to drive the second transmission wheel 7 to rotate, and realize a plurality of states including the single rotation of the first rotary disk 2, the first rotary disk 2 rotates itself and rotates with the second rotary disk 1, and the first rotary disk 2 rotates with the second rotary disk 1 without self rotation. The specific transmission relationship is clear and will not be repeated here.

Furthermore, the third transmission mechanism in this embodiment includes a first pulley 20, a second pulley 21 and a transmission belt 22. The first pulley 20 is connected to the second rotary shaft 5, the transmission belt 22 is connected between the first pulley 20 and the second pulley 21, and the second pulley 21 is connected to the second motor 23. In this embodiment, the second motor 23 may be motors such as a direct current (DC) brushless motor that may control the rotation direction, braking state, and free state. The second motor 23 and the second rotary shaft 5 are driven by a belt transmission mechanism.

### Embodiment 4

As shown in FIG. 4, this embodiment is a combination of embodiment 2 and embodiment 3, adopts a dual motor form, and a bracket 19 is provided, and the second motor 23 is mounted at the bracket 19. An output shaft of the second motor 23 is directly connected to the second transmission wheel 7, and there is no need to provide a third transmission mechanism. The first transmission wheel 6 and the second transmission wheel 7 are also in the form of bevel gears, which occupy a small space and have a simple structure.

### Embodiment 5

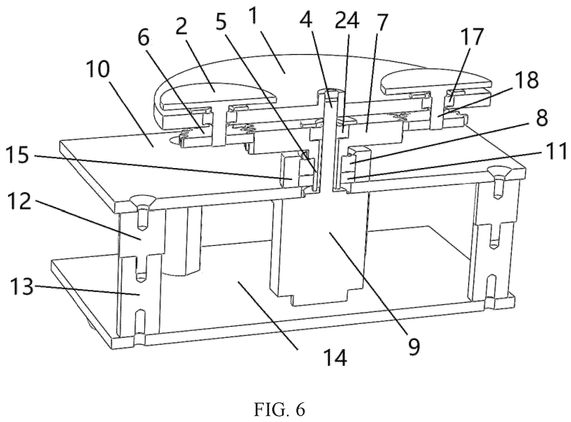

Embodiment 5 has most of the same structure as embodiment 1, and only the differences with embodiment 1 are described. As shown in FIG. 6, this embodiment is different from embodiment 1 in that the mount position and connection relationship of the first one-way clutch 3 are only changed. Specifically, the first one-way clutch 3 in this embodiment is provided between the third rotary shaft 4 and the second transmission wheel 7, to restrict the second transmission wheel 7 to rotate synchronously only when the third rotary shaft 4 rotates in the second direction. Similarly, the mount position and connection relationship of the second one-way clutch 11 remain unchanged. That is, the second one-way clutch 11 is provided at the second rotary shaft 5 of the second transmission wheel 7 to restrict the second transmission wheel 7 to rotate in the first direction. The limiting directions of the first one-way clutch 3 and the second one-way clutch 11 are opposite, that is, the second direction is opposite to the first direction.

Specifically, the outer ring of the first one-way clutch 3 is connected to the second rotary shaft 5, and the inner ring of the first one-way clutch 3 is connected to the third rotary shaft 4.

An example of a one-way clutch using a one-way bearing is taken. An example that the inner ring of the first one-way bearing (as shown in the figures, the reference object is the third rotary shaft 4) may only rotate clockwise, since the inner ring of the first one-way bearing is connected to the third rotary shaft 4, its inner ring always rotates with the third rotary shaft 4, and the inner ring of the second one-way bearing (as shown in the figures) may only rotate counterclockwise is taken. When the third rotary shaft 4 rotates clockwise and drives the second rotary disk 1 to rotate clockwise, since the inner ring of the second one-way bearing may only rotate counterclockwise, the second transmission wheel 7 and the outer ring of the first one-way bearing cannot rotate at this time, and the first rotary disk 2 rotates around the second transmission wheel 7 and rotates on its own to perform material mixing operations. When the third rotary shaft 4 rotates counterclockwise and drives the second rotary disk 1 to rotate counterclockwise, since the inner ring of the first one-way bearing may only rotate clockwise, it drives the outer ring to rotate counterclockwise synchronously (at this time, the inner and outer rings of the first one-way bearing are locked and there is no relative rotation), thereby driving the second transmission wheel 7 to rotate counterclockwise. Since both the second transmission wheel 7 and the second rotary disk 1 rotate counterclockwise, the first rotary disk 2 rotates around the second transmission wheel 7 but does not rotate itself. The present application further provides a centrifugal apparatus, including: the centrifugal drive device as described by any one of above.

Furthermore, in the centrifugal apparatus provided by the present application, the centrifugal apparatus also has the various advantages as described above since it has the centrifugal drive device as described above.

It should be noted that the above embodiments are only used to explain the solutions of the present application, and are not limited thereto; although the present application has been described in detail with reference to the foregoing embodiments, it should be understood by those skilled in the art that modifications to the solutions documented in the foregoing embodiments and equivalent substitutions to a part of the features may be made and these modifications and substitutions do not make the essence of the corresponding solutions depart from the scope of the solutions of various embodiments of the present application.

## Claims

1. A centrifugal drive device, comprising a first rotary disk (2), a second rotary disk (1), a first transmission mechanism, a second transmission mechanism and a drive mechanism;
wherein an output end of the drive mechanism is connected to the second rotary disk (1) to drive the second rotary disk (1) to rotate around a center of rotation of the second rotary disk (1) itself;
wherein the first rotary disk (2) is rotatably provided at the second rotary disk (1), and is connected to the second transmission mechanism through the first transmission mechanism; the first transmission mechanism and the second transmission mechanism are switchable between a rotary state and a lockup state respectively, to enable the first rotary disk (2) to rotate around a center of rotation of the first rotary disk (2) itself or to be locked when the second rotary disk (1) rotates synchronously.

2. The centrifugal drive device of claim 1, wherein the first transmission mechanism comprises a first transmission wheel (6) and a first one-way clutch (3), the second transmission mechanism includes a second transmission wheel (7) and a second one-way clutch (11), and the drive mechanism comprises a first motor (9);
wherein the first transmission wheel (6) is connected to the second transmission wheel (7) in a transmission manner, and the first transmission wheel (6) is connected to the first rotary disk (2) in a transmission manner through a first rotary shaft (18);
wherein the second one-way clutch (11) is provided at a second rotary shaft (5) of the second transmission wheel (7) to restrict the second transmission wheel (7) to rotate around a first direction;
wherein an output end of the first motor (9) is connected to the second rotary disk (1) in a transmission manner through a third rotary shaft (4);
wherein the first one-way clutch (3) is provided at the first rotary shaft (18), to restrict the first transmission wheel (6) and the first rotary disk (2) to rotate around a second direction, or the first one-way clutch (3) is provided between the third rotary shaft (4) and the second transmission wheel (7) to restrict the second transmission wheel (7) to rotate synchronously only when the third rotary shaft (4) rotates around a second direction; and
wherein the second direction is opposite to the first direction.

3. The centrifugal drive device of claim 2, further comprising a support table, wherein the drive mechanism is fixed to the support table, an outer ring of the second one-way clutch (11) is fixed at the support table, and an inner ring of the second one-way clutch (11) is connected to the second rotary shaft (5); the second rotary disk (5) is provided with a through hole for mounting the first rotary shaft (18), an outer ring of the first one-way clutch (3) is fixed inside the through hole, an inner ring of the first one-way clutch (3) is connected to the first rotary shaft (18), or an outer ring of the first one-way clutch (3) is connected to the second rotary shaft (5), and an inner ring of the first one-way clutch (3) is connected to the third rotary shaft (4).

4. The centrifugal drive device of claim 3, wherein the first transmission mechanism further comprises a first support bearing (17), the first support bearing (17) and the first rotary shaft (18) are coaxially provided, and the first support bearing (17) is connected between the second rotary disk (1) and the first rotary shaft (18);
wherein the second transmission mechanism further comprises a second support bearing (8), the second support bearing (8) and the second rotary shaft (5) are coaxially provided, and the second support bearing (8) is connected between the support table and the second rotary shaft (5).

5. The centrifugal drive device of claim 1, wherein the drive mechanism further comprises a second motor (23), the second motor (23) is connected to the second transmission mechanism in a transmission manner to drive the second transmission mechanism to rotate around a center of rotation of the second transmission mechanism itself or to stop.

6. The centrifugal drive device of claim 3, wherein the support table comprises a support plate (10), a pillar (13) and a bottom plate (14), the support plate (10) is supported at the bottom plate (14) by the pillar (13), the drive mechanism is fixed to the support plate (10), and the outer ring of the second one-way clutch (11) is fixed at the support plate (10).

7. The centrifugal drive device of claim 3, wherein the support table comprises a support plate (10), a pillar (13), a bracket (19) and a bottom plate (14), the support plate (10) is supported at the bottom plate (14) by the pillar (13), the drive mechanism is fixed to the support plate (10), the bracket (19) is fixed to the support plate (10) and the outer ring of the second one-way clutch (11) is fixed to the bracket (19).

8. The centrifugal drive device of any one of claims 2 to 7, wherein the first one-way clutch (3) and the second one-way clutch (11) are one of a one-way bearing, a ratchet structure or an electromagnetic clutch respectively.

9. The centrifugal drive device of any one of claims 2 to 7, wherein the first transmission wheel (6) and the second transmission wheel (7) are bevel gears respectively.

10. The centrifugal drive device of any one of claims 2 to 7, wherein an axis of the first rotary disk is provided parallel to an axis of the second rotary disk, or is provided at an angle with respect to an axis of the second rotary disk.

11. A centrifugal apparatus, comprising the centrifugal drive device of any of claims 1 to 10.
